# EUROPÄISCHE PATENTSCHRIFT

(11) **EP 0 468 019 B1**
(45) Veröffentlichungstag und Bekanntmachung des Hinweises auf die Patenterteilung: **06.07.1994**
(21) Anmeldenummer: 91903432.2
(22) Anmeldetag: 08.02.1991
(51) Int. Cl.: G01B 9/02, G02F 1/225

(54) **INTERFEROMETER**
INTERFEROMETER
INTERFEROMETRE

(30) Priorität: 09.02.1990 DE 4003855
(43) Veröffentlichungstag der Anmeldung: 29.01.1992
(73) Patentinhaber: Dr. Johannes Heidenhain GmbH, D-83292 Traunreut (DE)
(72) Erfinder: JESTEL, Dieter, D-4620 Castrop-Rauxel (DE); FRANZ, Andreas, D-8221 Kienberg (DE); MICHEL, Dieter, D-8220 Traunstein (DE)
(74) Vertreter: Kirschner, Klaus Dieter, Dipl.-Phys.
(86) Internationale Anmeldenummer: EP9100246
(87) Internationale Veröffentlichungsnummer: WO9112487

(56) Entgegenhaltungen:
- EP-A- 0 290 789
- EP-A- 0 297 243
- US-A- 4 744 661
- US-A- 4 865 453

## Beschreibung

Die Erfindung betrifft ein Interferometer zur vorzeichenrichtigen Bestimmung der Änderung der optischen Weglänge.

Ein Michelson-Interferometer, welches integriert-optisch aufgebaut ist, ist in der DE-OS 38 25 606 beschrieben. Dieses Interferometer besteht aus einer monochromatischen Laserlichtquelle, einem Strahlteiler, einem Referenzspiegel und einem Meßspiegel sowie Lichtleitfasern zum Führen des Lichtes hin zum Strahlteiler und zur Rückführung des das Meßsignal tragenden Lichts zu einem Detektor. Dabei ist der Strahlteiler durch einen integriert-optischen, symmetrischen Koppler in einem Glassubstrat gebildet, in dem durch strukturierten Jonenaustausch erzeugte Wellenleiter angeordnet sind, die zum einen den Meßarm und zum anderen den Referenzarm des Interferometers bilden.

US-A-4 744 661 zeigt ein integriert-optisches Interferometer mit einem elektro-optischen Phasenmodulator. Es sind Meß- und Referenzarme und Strahlteiler sowie Strahlvereiniger vorgesehen. Ein Phasenmodulator ist vorgesehen, um eine Phasendifferenz zwischen Meßarm und Referenzarm einzustellen.

EP-A-0 290 789 zeigt ein Interferometer zur Messung des Abstandes zwischen dem Interferometer und einer Meßfläche, wobei ebenfalls ein Meßarm und Referenzarme vorgesehen sind und eine Phasendifferenz zwischen dem Meßarm und den Referenzarmen eingestellt wird.

Der Erfindung liegt daher die Aufgabe zugrunde, ein Interferometer der eingangs genannten Art so auszugestalten, daß es auf einfache und sichere Weise optische Weglängenänderungen mit hoher Auflösung und richtungsbestimmt nachweisen kann.

Die Erfindung löst diese Aufgabe mit Hilfe der Merkmale des Anspruchs 1. Vorteilhafte Ausführungsformen der Erfindung sind Gegenstand der abhängigen Ansprüche. Außerdem wird ein Verfahren angegeben, das mit Hilfe des erfindungsgemäßen Interferometers die Messung von optischen Weglängenänderungen richtungsbestimmt und mit großer Exaktheit ermöglicht.

Mit Hilfe des erfindungsgemäßen Interferometers bzw. mit dem erfindungsgemäßen Verfahren können somit sehr exakt hoch auflöschende Positionsmessungen sowie Brechzahländerungen im Meßobjekt festgestellt werden. Durch die Kombination von Zählverfahren und Einseitenbandmodulation können daher auch große Weglängenänderungen richtungsbestimmt schnell angezeigt werden (Zählverfahren) und der genaue Wert der optischen Weglängenänderung bzw. Brechzahländerun erkannt werden (Einseitenbandverfahren).

Ausführungsbeispiele der Erfindung werden nun anhand der beiliegenden Zeichnungen beschrieben. Es zeigen:
- Fig. 1: den schematischenAufbau eines intergriert-optischen Michelson-Interferometers;
- Fig. 2: das Schaltschema der Auswertelektronik;
- Fig. 3: eine Variante eines Michelson-Interferometers mit direkter Beleuchtung;
- Fig. 4 bis 8: weitere Ausführungsformen des erfindungsgemäßen Interferometers;
- Fig. 9 und 10: eine Anwendung einer Ausführungsform des erfindungsgemäßen Interferometers;
- Fig. 11: eine Ausführung des erfindungsgemäßen Interferometers als Mach-Zehnder-Interferometer;
- Fig. 12 und 13: eine Ausführung des erfindungsgemäßen Interferometers als Doppel-Mach-Zehnder-Interferometer.

Bei dem erfindungsgemäßen Interferometer sind im Substrat zwei Strahlteiler vorgesehen, so daß sich ein gemeinsamer Arm als Meßarm und zwei separate Arme als Referenzarme ergeben. In den gemeinsamen Arm wird das Licht eines Lasers über eine Lichtleitfaser eingekoppelt. Hinter der Einkoppelstelle teilt sich der Meßarm in zwei auf die Referenzarme zulaufende Wellenleiterstrukturen auf, die im weiteren Verlauf wieder zusammengeführt werden. Somit ergeben sich zwei Y-förmige Weichen, in denen das Licht aufgeteilt bzw. zusammengeführt wird. Es entstehen somit zwei Richtkoppler (3 dB), die als Strahlteiler dienen. Das reflektierte Licht der Referenzspiegel, die z.B: aus auf die Wellenleiterendflächen aufgedampftem Aluminium bestehen, interferiert mit dem vom Objektspiegel zurückgeworfenen Licht. Die Interferenzsignale werden über an die Stirnflächen gekoppelte Mehrmodenfasern zwei Detektoren zugeführt. Ein thermo-optischer Modulator auf einem der beiden Referenzarme ermöglicht die Einstellung von 90° Phasendifferenz zwischen beiden Referenzarmen, womit eine schnelle Vorwärts/Rückwärts-Erkennung erfolgt. Zur Einstellung einer 90°-Phasenverschiebung in dem Referenzarm bieten sich mehrere Methoden an. Eine Methode besteht darin, den thermo-optischen Modulator gleichspannungsmäßig anzusteuern. Bei einer anderen passiven Methode werden die Eigenschaften des Wellenleiters durch gezieltes Aufbringen von Schichten, sogenannten Overlayern, beeinflußt. Das geschieht durch Auftragen von geeigneten Substanzen, wie z.B. Klebstoffen, oder durch Aufdampfen bzw. Aufsputtern von z.B. Siliciumoxidschichten. Hierdurch wird bereits bei der Herstellung des Chips die gewünschte Phasenverschiebung eingestellt. Bei einer weiteren passiven Methode wird eine dünne Schicht über dem Wellenleiter abgetragen, um die Eigenschaften des Wellenleiters zu beeinflussen. Desweiteren können die Eigenschaften des Wellenleiters durch Dimensionierung (Breite, Dichte) beeinflußt werden.

Die so manipulierten Signale werden von den Detektoren zur Auswertung der später beschriebenen Auswertelektronik zugeführt. Dabei werden zwei Auswertungsverfahren parallel betrieben. Das "Streifenzählen" mit orthogonalen Detektorsignalen ist mit einer Phasenmessung durch optischen Überlagerungsempfang kombiniert. Wegänderungen mit einer Auflösung entsprechend einem Bruchteil der Wellenlänge (λ/n) und Richtungserkennung werden mit dem Quadratursignal und dem Zählverfahren ermittelt. Hochauflösende (z.B. λ/100) Phasendetektion wird mit der Einseitenbandmodulation durchgeführt.

Um schnelle Bewegungen des Objektspiegels erfassen zu können, werden die Extrema eines Detektorsignals gezählt. Dieser Zählmodus entspricht dem Ringezählen bei einem Interferometer. Bei einem klassischen Aufbau ist die Bewegungsrichtung durch das Zusammen- oder Auseinanderlaufen der Ringe bzw. durch den Signalverlauf zweier um 1/2-Ringbreite versetzte Detektoren zu erkennen. Bei dem integriert-optischen Aufbau sind einmodige Wellenleiter eingesetzt und es gibt nur eine Intensitätsmodulation. Die oben genannte passive Meßmethode mit Richtungserkennung wird durch den einen Referenzarm erzielt, der um 90° phasenverschoben gegenüber dem anderen ist. Ein Detektorsignal liefert die Zählimpulse für den Zähler, das zweite Detektorsignal ist orthogonal dazu und bestimmt die Zählrichtung, die sich aus der Bewegungsrichtung des Meßspiegels ergibt.

Die hochauflösende Auswertung der Spiegelposition erfolgt mittels Einseitenbandmodulation über den thermo-optischen Modulator im Meßarm des Interferometers. Durch das optische Überlagerungsverfahren wird die optische Phasendrehung, die proportional zur Abstandsänderung ist, in eine niederfrequente elektrische Phasendrehung umgewandelt. Die mit einem kommerziellen Phasenmeßgerät ermittelte Phase kann auf etwa 1° gemessen werden. Dies entspricht einer Auflösung in der Abstandsänderung von etwa 1 nm je nach Wellenlänge.

Es wird nun genauer auf das Zählverfahren eingegangen.

Eine schnelle Vor-/Rückwärtserkennung (Richtungsdiskriminierung) und Meßwerterfassung wird mit dem Zählverfahren erzielt. Vorausgesetzt wird, daß die Detektorsignale um 90° phasenverschoben zueinander sind. Auf dem integriert-optischen Chip werden direkt zwei Detektorsignale erzeugt. Um deren Leistungskurve auf 90° Phasendifferenz zueinander zu bringen, wird ein thermo-optischer Modulator, z.B. mit einer Gleichleistung, betrieben. Mit einem Oszilloskop wird die Phasendifferenz eingeregelt. Die somit orthogonal eingestellten Detektorsignale dienen zur Vor-/Rückerkennung bzw. Richtungsdiskriminierung. Das Richtungssignal wird als TTL-Signal an den Zähler übergeben. Das Signal eines Detektors wird in Form von Nadelimpulsen auf den Zähler gegeben. Ohne Einseitenbandmodulation ist diese Ausführungsform ausreichend. Wird der Phasenschieber im oberen Referenzarm durch die oben angegebene passive Abstimmung ersetzt, so ist der interferometrische Sensor, wie bereits erwähnt, ganz ohne elektrische Zuleitung zu betreiben.

Für die höhere Auflösung wird der Phasenschieber im Meßarm über einen Funktionsgenerator und Verstärker angesteuert. Die Modulation geschieht in diesem Fall mit einer Frequenz von 1 kHz. Da der Phasenschieber auf dem Meßarm des Interferometers liegt, wirkt sich die Phasenmodulation auf beide Referenzarme gleich aus. Der Zähler folgt dieser kHz-Modulation problemlos. Dabei werden stetig in Bruchteilen der Wellenlänge(λ/n) entsprechenden Einheiten entsprechend der 2π-Phasenmodulation für das Einseitenbandverfahren auf und ab gezählt. Somit springen die letzten Digits der Anzeige des Zählers und sind mit dem Auge nicht ablesbar. Für die Meßwertdarstellung auf der digitalen Anzeige mit z.B. λ/n Auflösung werden die unteren Digits getriggert von dem Funktionsgenerator in einen Speicher geschrieben. Somit ist die Anzeige an eine definierte Phase des dynamischen Phasenschiebers im Meßarm gekoppelt.

In der Auswertungseinheit wird die Bewegungsrichtung des Meßspiegels zusätzlich mit Leuchtdioden angezeigt, die an der Vor-/Rückerkennung angeschlossen sind. Dieses Signal erlaubt, in einfacher Weise Schwinugnsamplitudenmessungen durchzuführen, indem es auf das Gate eines Zählers gegeben wird.

Bei Einseitenbandverfahren transferiert die phasenmodulierte Einseitenbanddetektion Amplitude und Phase eines optischen Signals linear in eine niederfrequente Amplitude und Phase, die getrennt voneinander gemessen werden. Bei einer ausreichenden Einseitenbandmodulation gibt es eine strenge Frequenzversetzung. Dem optischen Träger wird eine Modulation aufgeprägt, so daß ein Seitenband gerade verschwindet. Damit ist es möglich, die optische Phase in eine einfacher meßbare elektrische Phase umzuwandeln.

Da die Phasenverschiebung eines thermo-optischen Modulators nicht linear mit dem Regelsignal zusammenhängt, ist die Möglichkeit einer elektrischen Phasennachstellung im Meßarm des Interferometers nicht realisiert. Nachteilig wirken sich auch die 2π-Diskontinuitäten auf den Regler aus. Da es sich hier um leistungsgesteuerte thermo-optische Modulatoren handelt, ist eine Phasennachführung zu träge und die im Chip eingebrachte thermische Belastung wäre abhängig von der Meßphase. Aus den oben genannten Gründen ist eine Auswertung der Phasenbeziehung zwischen Meß- und Referenzarm so konzeptioniert, daß der Einseitenbandmodulator stetig mit der gleichen Ansteuerfunktion durchläuft, den Zählmodus des Interferometers nicht stört und aufgrund der mit jeder Modulationsperiode konstanten elektrischen Leistung das Interferometer im thermischen Gleichgewicht beläßt. Das Phasenmeßgerät vergleicht die Phase des Lichts im Meßarm mit dem des Referenzarms und zeigt dieses digital an.

Das Einseitenbandverfahren erfordert bei der angestrebten Meßgenauigkeit eine exakte Einstellung des Phasenhubs. Bei thermo-optischen Phasenmodulatoren muß die Modulatorkennlinie in die Ansteuerfunktion mit eingerechnet werden.

Bei der Einseitenbandunterdrückung gibt es analoge und digitale Modulationsfunktionen. Auf analoge Weise läßt sich die Einseitenbandmodulation durch eine sägezahnförmige Ansteuerung des Modulators bewerkstelligen. Das eine Seitenband läßt sich damit vollständig unterdrücken. Mit einem dem Detektor nachgeschalteten Bandpaßfilter wird die zugehörige Frequenz ausgefiltert. Ist die Einseitenbandunterdrückung nicht vollständig, so verringert dies die Genauigkeit der Phasenmessung. Bei diesem analogen Verfahren muß der Spitzenphasenhub sehr genau eingehalten werden, um eine ausreichend hohe Einseitenbandunterdrückung einzuhalten und damit eine hohe Genauigkeit zu erzielen.

Diese sägezahnförmige Modulationsfunktion kann aber auch durch eine treppenförmige digitale Modulationsfunktion mit einer 2π-Phasendrehung innerhalb einer Periode ersetzt werden. Digitale Ansteuerfunktionen haben den Vorteil, mit Prozessorsteuerungen realisierbar zu sein.

Darüberhinaus gibt es digitale Modulationsfunktionen, die mäanderförmige um eine Sägezahnkurve verlaufen und somit Abweichungen des Spitzenphasenhubs vom Optimalwert tolerieren. Diese Funktion ist deutlich unempfindlicher gegenüber Abweichungen vom optimalen Funktionsverlauf.

In der Auswertelektronik sind die Modulationsspannungen der einzelnen Stufen einstellbar, die dann alternierend auf den Phasenmodulator geschaltet werden. Die Wiederholfrequenz beträgt dabei 1 kHz. Eine freie Einstellbarkeit der Ansteuerstufen für die thermo-optischen Modulatoren geschieht entweder durch einen Potentiometerabgleich für jede Stufe und den entsprechenden Phasenhub oder durch einen Prozessor mit D/A-Wandler und software-gesteuerter Stufenfunktion. Damit wird man dem Verhalten des thermo-optischen Modulators gerecht. Zum einen ist die optische Phasendrehung proportional zur eingespeisten elektrischen Leistung und damit proportional zum Quadrat der angelegten Spannung, zum anderen kann der Widerstand der Heizelektrode temperaturunabhängig sein. Mit einstellbaren Stufen können geeignet vorverzerrte Signale des Funktionsgenerators herangezogen werden.

Im folgenden werden die in den Fig. gezeigten Ausführungsbeispiele im einzelnen beschrieben.

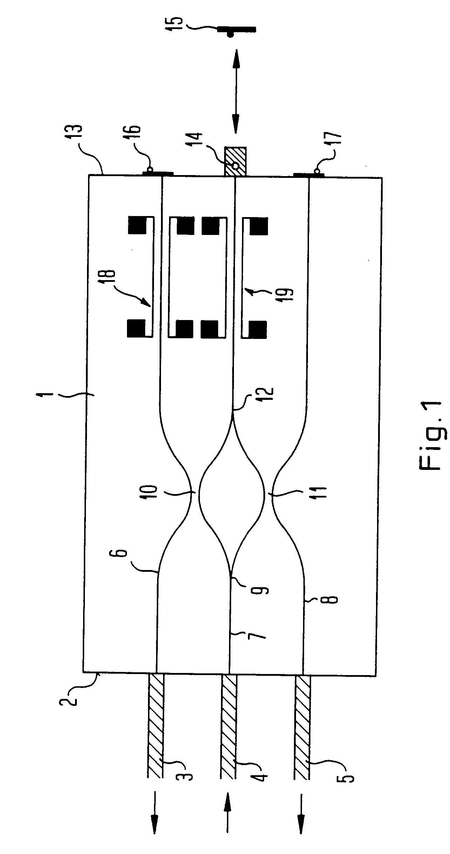

Die Ausführungsform des Interferometers nach Fig. 1 weist ein Glassubstrat 1 auf. Auf die Stirnseite 2 des Substrats 1 sind drei Lichtleitfasern 3, 4 und 5 angekoppelt, z.B. aufgeklebt, wobei die Lichtleitfaser 4 als Einkoppelfaser für das von einem Laser stammende Licht dient und die Lichtleitfasern 3 und 5 zu je einem Photodetektor führen. Im Substrat 1 wird das Licht in Wellenleitern 6, 7 und 8 geführt, die durch einen feldunterstützten Kalium-Ionenaustausch hergestellt wurden. Der Ionenaustausch wird mit einem unterstützenden elektrischen Feld von z.B. 50 V/mm und bei einer Temperatur von 450°C durchgeführt. Der Ionenaustausch mit typischen Austauschzeiten von 10 sec verläuft landungskontrolliert, um eine reproduzierbare Wellenleiterherstellung zu gewährleisten. Die Streifenwellenleiter sind für den einwelligen Betrieb bei der Wellenlänge λ = 0,633 »m ausgelegt. Der Wellenleiter 7 teilt sich bei 9 in zwei Arme, die sich bei 10 und 11 den Wellenleitern 6 und 8 nähern und bei 12 wieder zusammengeführt werden. Der Meßarm 7₁ des Welleinleiters 7 endet an der Stirnfläche 13 des Substrats 1 vor einer Gradienten-Indexlinse 14, die direkt auf die Endfläche des Meßarms 7₁ geklebt ist, um das Licht zu kollimieren. Im Abstand von der Linse ist der Objektspiegel 15 aufgestellt. Die Wellenleiter 6 und 8 nähern sich bei 10 und 11 dem Wellenleiter 7. Die Referenzarme 6₁ und 8₁ der Wellenleiter 6 und 8 enden an der Stirnfläche 13 des Substrats 1 vor auf die Stirnfläche 13 aufgedampften Referenzspiegeln 16 und 17. Das vom Laser kommende, durch die Lichtleitfaser 4 in den Wellenleiter 7 eingekoppelte Licht wird in den beiden Richtkopplern 10 und 11 geteilt. Das reflektierte Licht der Referenzspiegel 16 und 17 interferiert mit dem vom Objektspiegel zurückgeworfenen Licht. Die Interferenzsignale werden über die an die Stirnfläche gekoppelten Mehrmodenfasern den beiden Photodetektoren zugeführt. Ein thermo-optischer Modulator 18 auf dem Referenzarm 6₁ ermöglicht die Einstellung von 90° Phasendifferenz zwischen den beiden Referenzarmen 6₁ und 8₁, womit eine schnelle Vorwärts-/Rückwärts-Erkennung erfolgen kann. Auf dem Meßarm 7₁ ist in Höhe des thermo-optischen Modulators 18 ein weiterer thermo-optischer Modulator 19 für hochauflösende Messungen mittels Phasenmodulation und Einseitenbanddetektion aufgebracht. Die Heizelektroden der thermo-optischen Modulatoren 18 und 19 bestehen aus einer 400 nm dicken, aufgedampften Aluminiumschicht. Die Elektroden werden photolitographisch strukturiert mit einer Leiterbreite von 4 »m,einer Länge von 7 mm und einem Abstand von 6 »m zueinander.

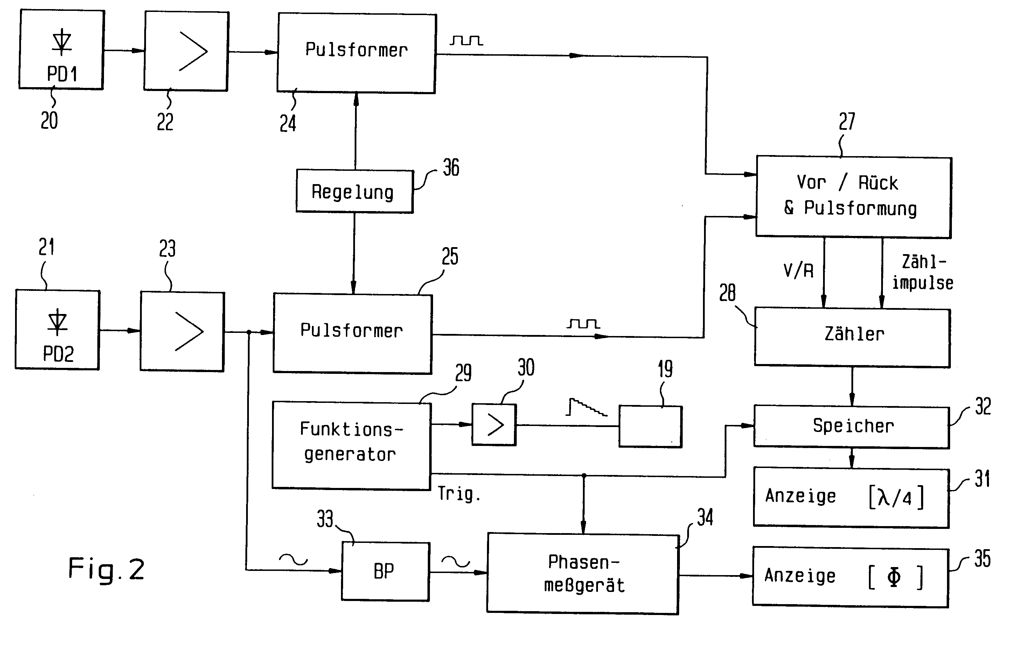

Die von den Lichtleitphasern 3 und 5 den Photodetektoren 20 und 21 zugeführten Signale werden mit Hilfe einer Auswertelektronik, die in Fig. 2 schematisch dargestellt ist, weiter verarbeitet. Beide Detektorsignale werden in den Verstärkern 22 und 23 vorverstärkt und auf je einen Impulsformer 24, 25 (Schnitt-Trigger) gegeben, in denen die ankommenden Signale in Rechteckimpulse umgeformt werden. In einem Richtungsdiskriminator 27 wird das Signal von einem der beiden Impulsformer 24, 25 in Nadelimpulse umgewandelt und auf einen Zähler 28 gegeben. Durch Vergleich der Signale der beiden Impulsformer 24, 25 bestimmt der Richtungsdiskriminator 27, ob es sich bei der Verschiebung des Spiegels um eine Vor- oder Rückbewegung handelt, und gibt ein Signal V/R an den Zähler 28.

Für die höhere Auflösung wird der thermo-optische Modulator 19 über einen Funktionsgenerator 29 und einen nachgeschalteten Verstärker 30 angesteuert. Da der Modulator 19 auf dem Meßarm 7₁ des Interferometers liegt, wirkt sich die Phasenmodulation auf beide Referenzarme 6₁, 8₁ gleich aus. Die Modulation geschieht in diesem Falle mit einer Frequenz von 1 kHz, der der Zähler 28 problemlos folgen kann. Dabei wird stetig λ/n Einheiten entsprechend der 2π-Phasenmodulation für das Einseitenbandverfahren auf- und abgezählt.

Für die Meßwertdarstellung auf einer digitalen Anzeige 31 mit λ/4 Auflösung werden die beiden unteren Digits getriggert vor dem Funktionsgenerator 29 in einen Speicher 32 geschrieben.

Somit ist die Anzeige an eine definierte Phase des dynamischen Phasenschiebers, d.h. des thermo-optischen Modulators, 19 gekoppelt. Die Frequenzversetzung im Meßarm 7₁ geschieht mit Hilfe des thermo-optischen Modulators 19 mittels Einseitenbandmodulation. Die Modulation erfolgt derart, daß in dem erzeugten Spektrum um die Trägerfrequenz herum von einem Seitenbandpaar eines verschwindet. Dabei gibt es für die Einseitenbandunterdrückung analoge und digitale Modulationsfunktionen. Auf analoge Weise läßt sich die Einseitenbandmodulation durch eine sägezahnförmige Ansteuerung des Modulators 19 bewerkstelligen. Ein Seitenband läßt sich damit vollständig unterdrücken. Mit einem dem Detektor 21 nachgeschalteten Bandpaßfilter 33 wird die zugehörige Frequenz ausgefiltert.

Die sägezahnförmige Modulationsfunktion kann aber auch durch eine treppenförmige digitale Modulationsfunktion mit einer 2π-Phasendrehung innerhalb einer Periode ersetzt werden.

In der Auswertelektronik sind die Modulationsspannungen der einzelnen Stufen einstellbar, die dann alternierend auf den Phasenmodulator 19 geschaltet werden. Die Wiederholfrequenz beträgt dabei 1 kHz. Ein Phasenmeßgerät 34, das ebenfalls mit dem Funktionsgenerator 29 verbunden ist, vergleicht die Phase des Lichts im Meßarm 7₁ mit der des Referenzarms 8₁ und zweigt diese digital in der Anzeigeeinrichtung 35 an.

Die in Fig. 2 dargestellte Regelung 36 dient bei dem Einseitenbandverfahren dazu, exakte Rechteckimpulse zu erzeugen, indem sie die Impulsformer bzw. Verstärker nachregelt.

Die Anzeige 31 zeigt somit richtungsbestimmt die Veränderung des optischen Wegs in λ/n Genaugigkeit an, während die Anzeige 35 den genauen Zwischenwert hinzufügt. Durch eine Mikroprozessor können die beiden Anzeigen 31 und 35 zu einer einzigen Anzeige kombiniert werden.

Eine weitere Ausgestaltung der Erfindung ergibt sich, wenn auf dem Meßarm 7₁ ein Fenster ausgebildet ist, das eine Schicht trägt, welche chemisch beeinflußbar ist. Hierdurch gelingt der direkte Nachweis bestimmter Gase. Eine derartige Anordnung ist zwar bei einem Mach-Zehnder-Interferometer schon bekannt, bei dieser Vorrichtung besteht jedoch der Nachteil, daß nicht zu sehen ist, ob der Brechungsindex zu- oder abnimmt. Mit Hilfe des beschriebenen Aufbaus des Interferometers ist es jedoch möglich, auch dies genau zu bestimmen.

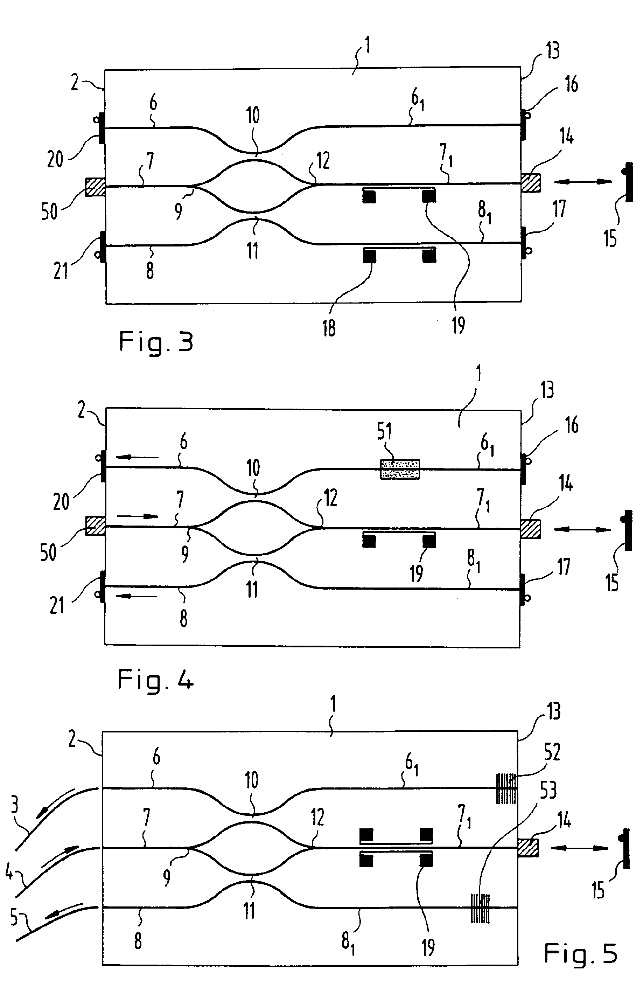

Fig. 3 zeigt eine Variante des erfindungsgemäßen Interferometers. Im Gegensatz zur Ausführung nach Fig. 1 sind eine Lichtquelle 50 und die Photodetektoren 21, 21 direkt an der Stirnseite 2 des Substrats 1 angebracht.

Im Ausführungsbeispiel nach Fig. 4 erfolgt die Einstellung der Phasendifferenz zwischen den beiden Referenzarmen 6₁, 8₁ passiv durch eine auf den Referenzarm 6₁ aufgebrachte transparente Schicht 51. Hierfür kommen z.B. aufgedampfte oder aufgesputterte anorganische Schichten, wie SiO₂, MgF₂, ebenso in Frage wie Polymere. Den gleichen Effekt erzielt man durch Abtragen einer definierten Schicht 51 über dem Referenzarm 6₁.

Fig. 5 zeigt ein weiteres Ausführungsbeispiel eines Michelson-Interferometers, bei dem statt der stirnseitigen Spiegel 16, 17 an den Referenzarmen 6₁, 8₁ sogenannte Bragg-Gitter 52, 53, wie sie z.B. auch in Laserdioden Verwendung finden, auf die Referenzarme 6₁, 8₁ aufgebracht sind. Die gewünschte Phasendifferenz zwischen den Referenzarmen 6₁, 8₁ wird hierbei über die unterschiedlichen Positionen der Bragg-Gitter 52, 53 und damit über die unterschiedliche Länge der Referenzarme 6₁, 8₁ eingestellt.

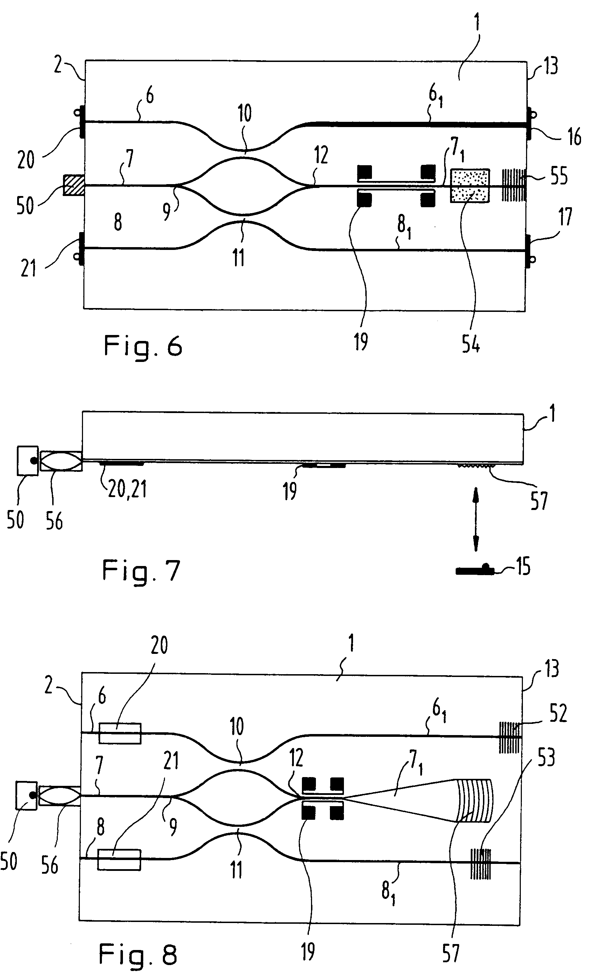

Eine unterschiedliche optische Länge der beiden Referenzarme 6₁, 8₁ läßt sich, wie in Fig. 6 schematisch dargestellt, auch über eine unterschiedliche Breite der Referenzarme 6₁, 8₁ erreichen. Der Referenzarm 6₁ ist in dem Beispiel von Fig. 6 breiter als der Referenzarm 8₁. Da der für die Lichtausbreitung im Wellenleiter maßgebliche effektive Brechnungsindex von der Breite der Wellenleiter abhängt, haben die beiden Referenzarme 6₁, 8₁ trotz gleicher geometrischer Längen unterschiedliche optische Längen. Fig. 6 zeigt außerdem die Verwendung eines Ausführungsbeispiels des erfindungsgemäßen Interferometers vom Michelson-Typ als Sensor, z.B. für Gas. Die geometrische Länge des Meßarms 7₁ bleibt hier konstant. Der bei dem oben beschriebenen Ausführungsbeispiel verwendete Reflektor am Ende des Meßarms 7₁ ist ein feststehendes Bragg-Gitter 55 auf dem Meßarm 7₁ ersetzt. Eine auf den Meßarm 7₁ aufgebrachte Sensorschicht 54 verändert je nach Konzentration eines zu messenden Gases oder einer zu messenden Flüssigkeit ihren Brechungsindex und verursacht somit eine Änderung der optischen Weglänge im Meßarm 7₁, die detektiert wird.

Fig. 7 und 8 zeigen eine weitere Ausführungsform für ein Interferometer vom Michelson-Typ. Die Laser-Lichtquelle 50 wird über eine Gradientenindexlinse 56 (sog. GRIN-Linse) in den Wellenleiter 7 eingekoppelt. Die Photodetektoren 20, 21 sind in diesem Fall nicht an der Stirnseite 2 des Substrats 1 angeklebt, sondern flächig auf die Wellenleiter 6, 8 aufgebracht. Die Auskopplung des Lichts in die von dem Substrat 1 und dem Reflektor 15 begrenzte Meßstrecke erfolgt hier nicht über eine stirnseitig angebrachte Kollimatoroptik 14, sondern mit Hilfe eines planaren fokussierenden Gitters 57. Dieses Gitter 57, das z.B. aus TiO₂ gebildet ist, formt das aus dem Meßarm 7₁ austretende Licht in ein kollimiertes Lichtbündel um, das nach Reflexion am Meßspiegel 15 über das gleiche Gitter 57 wieder in den Meßarm 7₁ eingekoppelt wird.

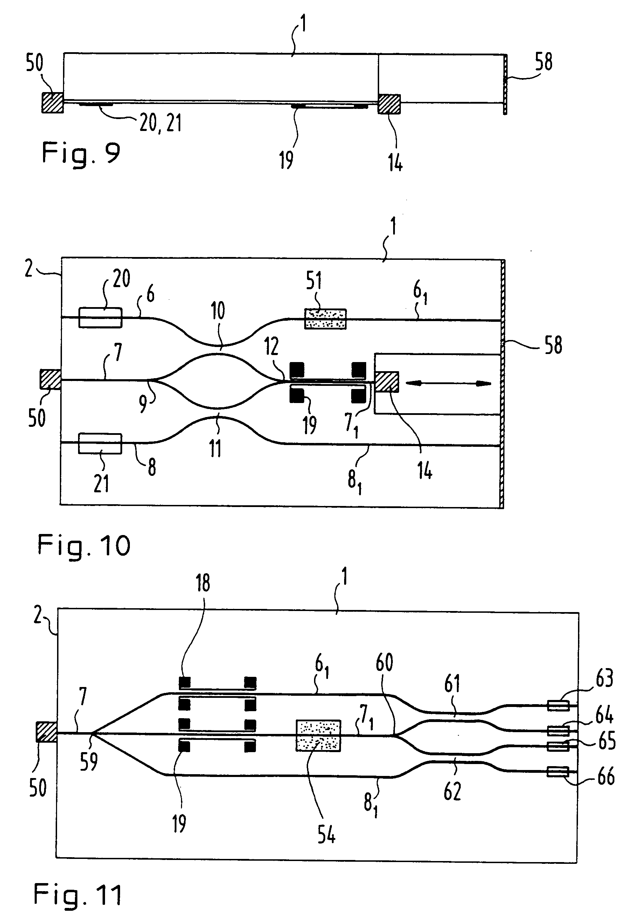

Fig. 9 und 10 zeigen eine Anwendung einer Ausführungsform des erfindungsgemäßen Interferometers als Refraktometer, mit dem der Brechungsindex der umgebenden Luft gemessen werden kann. Die geometrische Länge der Meßstrecke, die aus dem Meßarm 7₁, der Kollimatorlinse 14, einer Luftstrecke und einem festen Endpsiegel 58 besteht, bleibt konstant. Der Endspiegel 58 erstreckt sich über die Enden der Reflektorarme 6₁ und 8₁. Eine Änderung des Brechungsindex der Luft führt zu einer Änderung der optischen Weglänge im Meßarm 7₁, ohne die Referenzarme 6₁, 8₁ zu beeinflussen. Mit der gemessenen Änderung der optischen Weglänge kann eindeutig die Änderung des Brechungsindex der Luft bestimmt werden.

Fig. 11 zeigt eine Ausführung des erfindungsgemäßen Interferometers als Mach-Zehnder-Interferometer mit zwei Referenzarmen 6₁, 8₁. In einem Strahlteiler 59 wird das Licht auf den Meßarm 7₁ und die beiden Referenzarme 6₁, 8₁ aufgeteilt. Auch hier wird die Phasendifferenz zwischen den beiden Referenzarmen 6₁, 8₁ wieder mit Hilfe eines aktiven (z.B. thermo-optischen) oder passiven (transpartente Schicht) Phasenmodulators 18 eingestellt. Die zu messende Größe, wie z.B. die Gaskonzentration bei Verwendung als Gassensor, wirkt über die Sensorschicht 54 auf die optische Weglänge des mittleren Meßarms 7₁. Das Licht des Meßarms 7₁ wird durch einen Strahlteiler 60 aufgespalten und interferiert mit je einem Richtkoppler 61, 62 mit dem Licht des entsprechenden Referenzarms 6₁, 8₁. Jeder Richtkoppler 61, 62 weist zwei Ausgänge auf, deren Licht Photodetektoren 63, 64, 65, 66 zugeführt wird. Auf diese Weise erhält man Gegentaktsignale, die (durch Subtraktion) vorteilhaft zur Unterdrückung eines Gleichlichtanteils genutzt werden können. Genauso ist aber auch statt dieser beiden Richtkoppler 61, 62 je ein einfacher Strahlvereiniger für den Meßarm 7₁ und die Referenzarme 6₁, 8₁ in Verbindung mit nur einem Photodetektor möglich.

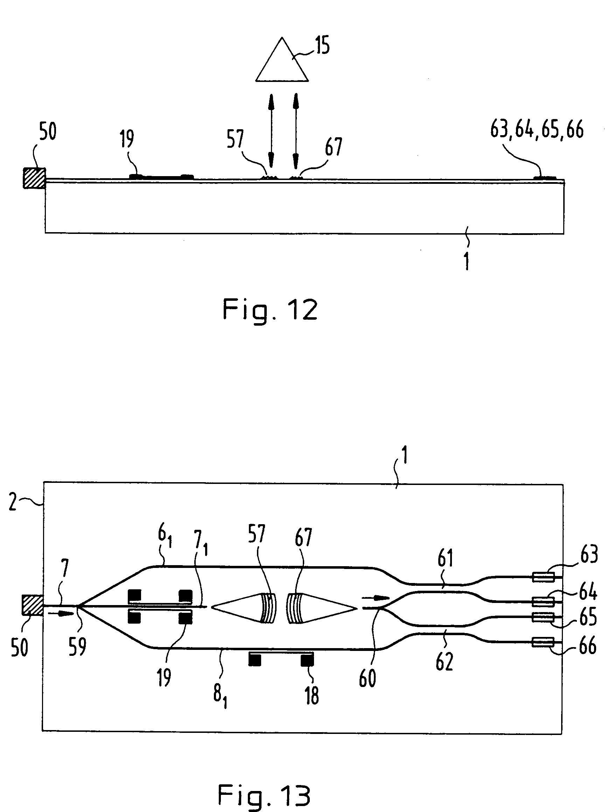

Fig. 12 und 13 zeigen ein Doppel-Mach-Zehnder-Interferometer ähnlich zu Fig. 11, das aber in diesem Fall zur Wegmessung dient. Ein erstes Koppelgitter 57 formt das Licht des Meßarms 7₁ in ein kollimiertes Strahlenbündel um, das von einem Meßreflektor 15 seitlich versetzt reflektiert wird und über ein zweites fokussierendes Gitter 67 wieder in den Meßarm 7₁ eingekoppelt wird. Auf diese Weise kann die Position des Meßreflektors 15 bestimmt werden.

Die Erfindung ist in mehrfacher Hinsicht nicht auf die speziellen technischen Mittel beschränkt, die im Zusammenhang mit den Ausführungsbeispielen beschrieben wurden. So muß für die Lichtquelle des Interferometers nicht unbedingt eine Laserlichtquelle verwendet werden. Bekanntlich besteht eine Beziehung zwischen der durch das Interferometer zu messenden Weglänge und der Koherenzlänge des Lichts der verwendeten Lichtquelle. In vielen Anwendungfällen hat daher beispielsweise das Licht von sogenanten Superlumineszenzdioden eine ausreichend lange Koherenzlänge, um die Messung durchführen zu können. Je nach Anwendungsfall könnnen auch andere Lichtquelle mit einem Licht mit hinreichender Koherenzlänge verwendet werden. Für das Substrat und die daran ausgebildeten Wellenleiter können auch andere Materialien als Glas mit durch Ionenaustausch hergestellten Wellenleitern verwendet werden. Beispielsweise können Lithiumniobat als Substrat, wobei die Wellenleiter in diesem Kristallen durch Titan-Eindiffusion oder Protonenaustausch erzeugt worden sind, III-V-Halbleiter als Substrat, in denen die Wellenleiter, einschließlich sogenannter Rib-Waveguides, durch Dotierung hergestellt worden sind, oder Halbleitersubstrate, beispielsweise aus Silizium, als Substrat verwendet werden, auf dem die Wellenleiter über einer Oxidschicht, beispielsweise Siliziumoxid, durch Glas oder ein organisches Material gebildet sind. Anstelle der im Zusammenhang mit den Ausführungsbeispielen erwähnten thermo-optischen Phasenmodulatoren können auch elektro-optische Phasenmodulatoren verwendet werden, wenn das Material des zu beeinflussenden Wellenleiters elektro-optisch aktiv ist, d.h. einen für die Phasenmodulation hinreichenden elektro-optischen Effekt zeigt, wenn ein elektrisches Feld an den Wellenleiter angelegt wird. Das elektrische Feld wird in diesen Fällen durch zwei Elektroden erzeugt, zwischen denen der Wellenleiter verläuft und die an einer Spannungsquelle angeschlossen sind. Derartige elektro-optsiche Phasenmodulatoren eignen sich beispielsweise mit den vorstehend erwähnten Wellenleitern, die durch Titat-Eindiffusion oder Protonenaustausch an Lithiumniobat-Kristallen oder durch die Dotierung von III-V-Halbleitern erzeugt worden sind. Schließlich wurden insbesondere im Zusammenhang mit dem ersten Ausführungsbeispiel Lichtleitfasern als Wellenleiter zwischen dem Interferometer und den Photodetektoren beschrieben. Zu diesem Zweck können jedoch auch Wellenleiter, wie sie im Zusammenhang mit dem Interferometer-Chip beschrieben wurden, verwendet werden.

## Patentansprüche

1. Interferometer mit einer Lichtquelle, vorzugsweise einer monochromatischen Laserlichtquelle, mindestens einem Strahlteiler (9), Strahlvereiniger (10,11), wobei der Strahlteiler (9) und der Strahlvereiniger (10,11) durch integriert-optische Elemente an einem Substrat (1) gebildet sind, Meß (7₁) - und Referenzarmen (6₁, 8₁), wobei neben dem Meßarm (7₁) wenigstens zwei separate Referenzarme (6₁, 8₁), die zur Einstellung einer Phasendifferenz eine unterschiedliche optische Weglänge haben, vorgesehen sind, mit einem zur Steuerung der Phasenlage steuerbaren Phasenmodulator im Meßarm (7₁), mit Wellenleitern zum Führen des Lichts hin zum Strahlteiler und zur Rückführung des Lichts hin zu Photodetektoren, und mit einer an den Photodetektoren (20, 21) angeschlossenen Auswertelektronik zur vorzeichenrichtigen Bestimmung der Änderung der optischen Weglänge im Meßarm (7₁).

2. Interferometer nach Anspruch 1, **dadurch gekennzeich****net, daß** der mindestens eine Phasenmodulator ein thermo-optischer oder elektro-optischer Modulator ist.

3. Interferometer nach Anspruch 1, **dadurch** **gekennzeich****net, daß** dem Meßarm (7₁) ein thermo-optischer oder elekto-optischer Phasenmodulator zugeordnet ist, und daß zumindest einem der Referenzarme (6₁ oder 8₁) ein weiterer Phasenmodulator zugeordnet ist.

4. Interferometer nach Anspruch 1 oder 2, **dadurch ge****kennzeichnet, daß** einem Referenzarm (6₁, 8₁) ein thermo-optischer oder elektro-optischer Phasenmodulator zugeordnet ist, der durch eine Gleichspannung oder einen Gleichstrom betrieben wird.

5. Interferometer nach Anspruch 4, **dadurch gekennzeich****net, daß** die Spannungs- bzw. Stromversorgung zur Erzielung einer konstanten Phasenverschiebung zwischen den Referenzarmen (6₁, 8₁) regelbar ist.

6. Interferometer nach einem der Ansprüche 1 bis 5, **da****durch gekennzeichnet, daß** die Beleuchtung und/oder die Rückführung des Lichts zu den Photodetektoren mittels Lichtleitfasern (3, 4, 5) erfolgt.

7. Interferomter vom Typ eines Michelson-Interferometers nach Anspruch 1, **dadurch gekennzeichnet, daß** der Meßarm (7₁) und die Referenzarme (6₁, 8₁) jeweils durch einen Reflektor (15, 16, 17; 52, 53, 55; 58) begrenzt sind.

8. Interferometer nach Anspruch 7, **dadurch gekennzeich****net, daß** die Reflektoren im Meß- und Referenzarm durch Spiegel (15, 16, 17, 58) gebildet sind.

9. Interferometer nach Anspruch 7, **dadurch gekennzeich****net, daß** die Reflektoren im Meß- und Referenzamr durch Bragg-Gitterreflektoren (52, 53, 55) gebildet sind.

10. Interferometer nach einem der Ansprüche 1 bis 9, **da****durch gekennzeichnet, daß** die Wellenleiter durch strukturierten Ionenaustausch in einem Substrat aus Glas gebildet sind.

11. Interferometer nach Anspruch 1 und 10, **dadurch ge****kennzeichnet, daß** nach Einstellung der Phasendifferenz von der Glassubstratschicht über einem zu einem Referenzarm gehörenden Wellenleiter eine Schicht definierter Dicke abgetragen ist.

12. Interferometer nach einem der Ansprüche 1 bis 9, **da****durch gekennzeichnet, daß** die Wellenleiter durch Titan-Eindiffusion oder Protonenaustausch auf einem kristallinen Lithiumniobat-Substrat ausgebildet sind.

13. Interferometer nach einem der Ansprüche 1 bis 9, **da****durch gekennzeichnet, daß** die Wellenleiter durch Dotierung auf einem III-V-Halbleitersubstrat ausgebildet sind.

14. Interferometer nach einem der Ansprüche 1 bis 9, **da****durch gekennzeichnet, daß** Wellenleiter aus Glas oder einem organischen Material auf einem Halbleitersubstrat, ggf. unter Einfügung einer Zwischen-Oxid-Schicht, ausgebildet sind.

15. Interferometer nach Anspruch 1, **dadurch gekennzeich****net, daß** auf dem Substrat im Bereich eines zu einem Referenzarm gehörenden Wellenleiters ein den Brechungsindex änderndes Material in Form einer Schicht aufgetragen ist.

16. Interferometer nach Anspruch 12, **dadurch gekennzeich****net, daß** das den Brechungsindex ändernde Material ein organisches Material ist.

17. Interferometer nach Anspruch 16, **dadurch gekennzeich****net, daß** die Schicht aus aufgedampftem und/oder aufgesputtertem anorganischem Material besteht.

18. Interferometer nach Anspruch 15 oder 17, **dadurch ge****kennzeichnet, daß** das Material eine Siliziumoxid-Schicht ist.

19. Interferometer nach Anspruch 1, **dadurch gekennzeich****net, daß** das aus dem Wellenleiter des Meßarms (7₁) austretende Licht mittels einer Linse (14) kollimiert und auf einen Reflektor (15) am zu messenden Objekt gerichtet wird.

20. Interferometer nach Anspruch 19, **dadurch gekennzeich****net, daß** die Linse (14) eine Gradienten-Index-Linse ist.

21. Interferometer nach Anspruch 1, **dadurch gekennzeich****net, daß** das aus dem Wellenleiter des Meßarms (7₁) austretende Licht mittels eines fokussierenden Gitters kollimiert ausgekoppelt und auf einen Reflektor (15) am zu messenden Objekt gerichtet ist.

22. Interferometer nach Anspruch 1, **dadurch gekennzeich****net, daß** für den Meßarm und die Referenzarme ein gemeinsamer Reflektor (58) an der Stirnseite des Substrats angebracht ist.

23. Interferometer vom Typ eines Mach-Zehnder-Interferometers nach Anspruch 1, **dadurch gekennzeichnet, daß** die Wellenleiter der Referenzarme und des Meßarms in Form von Mehrfach-Kopplern enden, wobei an deren Ausgängen zueinander phasenverschobene Signale detektierbar sind.

24. Interferometer nach Anspruch 23, **dadurch gekennzeich****net, daß** die Koppler als Zweifach-Richtkoppler (61, 62) ausgebildet sind, und daß an deren Ausgängen um etwa 180° zueinander phasenverschobene Signale detektierbar sind.

25. Interferometer nach Anspruch 1, **dadurch gekennzeich****net, daß** im Meßarm das Licht mittels eines ersten fokussierenden Gitters (57) kollimiert ausgekoppelt und auf einen Reflektor (15) am zu messenden Objekt gerichtet, dort reflektiert und mittels eines zweiten fokussierenden Gitters (67) wiederum in den Wellenleiter des Meßarms (7₁) eingekoppelt wird.

26. Interferometer nach Anspruch 25, **dadurch gekennzeich****net, daß** der Reflektor am zu messenden Objekt ein retro-reflektierendes Element ist (Fig. 12).

27. Interferometer nach einem oder mehreren der Ansprüche 1 bis 26, **gekennzeichnet durch** den Photodetektoren nachgeschaltete Vorverstärker (22, 23), den Vorverstärkern nachgeschaltete Impulsformer (24, 25), eine Ansteuereinheit (30) für den thermo-optischen oder thermo-elektrischen Modulator (19), einen Richtungsdiskriminator (27), einen diesem nachgeschalteten Zähler (28) und durch eine erste Anzeigeeinrichtung (31).

28. Interferometer nach Anspruch 27, **dadurch gekennzeich****net**, **daß** zur Ansteuerung des thermo-optischen oder elektro-optischen Modulators (19) ein Funktionsgenerator (29) vorgesehen ist, welcher mit einem Phasenmeßgerät (34) verbunden ist, in welches das von einem Photodetektor (21) kommende und in einem Bandpaßfilter (33) ausgefilterte Signal gelegt ist und welches mit einer zweiten Anzeigeeinrichtung (35) verbunden ist.

29. Interferometer nach Anspruch 28, **dadurch gekennzeich****net, daß** der Funktionsgenerator (29) mit einem Speicher (32) verbunden ist, der zwischen dem Zähler (28) und der ersten Anzeigeeinrichtung (31) liegt.

30. Interferometer nach einem der Ansprüche 27 bis 29, **dadurch gekennzeichnet, daß** zur Einseitenbandmodulation der thermo-optische oder elektro-optische Modulator (19) durch von dem Funktionsgenerator (29) erzeugte, sägezahnförmige Signale angesteuert ist, und daß die Phase zwischen den sägezahnförmigen Signalen und dem in einem Bandpaßfilter (33) gefilterten Signal eines Photodetektors (21) gemessen und angezeigt wird.

31. Interferometer nach Anspruch 27 oder 28, **dadurch ge****kennzeichnet, daß** der Modulator (29) von einer treppenförmigen, digitalen Modulationsfunktion mit einer 2π-Phasendrehung innerhalb einer Periode angesteuert wird.

32. Interferometer nach Anspruch 27 oder 28, **dadurch ge****kennzeichnet, daß** der Modulator (29) von einer digitalen Funktion angesteuert wird, die meanderförmig um eine Sägezahnkurve verläuft.

33. Interferometer nach einem der Ansprüche 27 bis 29, **dadurch gekennzeichnet, daß** die Wiederholfrequenz der den Modulator (19) ansteuernden Funktion 1 kHz beträgt.

34. Interferometer nach einem der vorhergehenden Ansprüche, **dadurch gekennzeichnet, daß** zur Einstellung der Ansteuerstufen für einen thermo-optischen oder elektro-optischen Modulator entweder ein Potentiometer für jede Stufe und den entsprechenden Phasenhub oder ein Mikroprozessor mit Digital/Analog-Wandler und software-gesteuerter Stufenfunktion vorgesehen ist.

## Claims

1. Interferometer with a light source, preferably a monochromatic laser light source, with at least one beam splitter (9), beam unifiers (10, 11), the beam splitter (9) and the beam unifier (10, 11) being formed on a substrate (1) by integrated optical elements,and with measurement and reference arms (6₁, 8₁), there being provided next to the measurement arm (7₁) at least two separate reference arms (6₁, 8₁), which have a different optical path length in order to set a phase difference, with a phase modulator in the measurement arm (7₁) which is controllable in order to control the phase position, with waveguides for guiding the light towards the beam splitter, and for returning the light toward photodetectors, and with an electronic evaluation system, connected to the photodetectors (20, 21) in order to determine, with the correct preceding sign, the alteration in the optical path length in the measurement arm (7₁).

2. Interferometer according to claim 1, characterised in that the at least one phase modulator is a thermo-optic or an electro-optic modulator.

3. Interferometer according to claim 1, characterised in that there is associated with the measurement arm (7₁) a thermo-optic or electro-optic phase modulator, and in that there is associated with at least one of the reference arms (6₁ or 8₁) a further phase modulator.

4. Interferometer according to claim 1 or 2, characterised in that there is associated with a reference arm (6₁, 8₁) a thermo-optic or electro-optic phase modulator, which is operated by a direct-current voltage or a direct current.

5. Interferometer according to claim 4, characterised in that the voltage or current supply may be regulated in order to achieve a constant phase displacement between the reference arms (6₁, 8₁).

6. Interferometer according to one of claims 1 to 5, characterised in that the illumination and/or return of the light to the photodetectors is effected by means of optical fibres (3, 4, 5).

7. Interferometer of the Michelson interferometer type according to claim 1, characterised in that the measurement arm (7₁) and the reference arms (6₁, 8₁) are respectively defined by a reflector (15, 16, 17; 52, 53, 55; 58).

8. Interferometer according to claim 7, characterised in that the reflectors in the measurement and reference arm are formed by mirrors (15, 16, 17, 58).

9. Interferometer according to claim 7, characterised in that the reflectors in the measurement and reference arm are formed by Bragg grid reflectors (52, 53, 55).

10. Interferometer according to one of claims 1 to 9, characterised in that the waveguides are formed by structured ion exchange in a glass substrate.

11. Interferometer according to claim 1 and 10, characterised in that, after setting the phase difference, a layer of defined thickness is laid off from the glass substrate layer through a waveguide belonging to a reference arm.

12. Interferometer according to one of claims 1 to 9, characterised in that the waveguides are formed by titanium diffusion or proton exchange on a crystalline lithium niobate substrate,

13. Interferometer according to one of claims 1 to 9, characterised in that the waveguides are formed by doping on a III-V semiconductor substrate.

14. Interferometer according to one of claims 1 to 9, characterised in that waveguides are formed from glass or an organic material on a semiconductor substrate, if necessary with introduction of an intermediate oxide layer.

15. Interferometer according to claim 1, characterised in that a material altering the refractive index is applied in the form of a layer on the substrate in the region of a waveguide belonging to a reference arm.

16. Interferometer according to claim 12, characterised in that the material altering the refractive index is an organic material.

17. Interferometer according to claim 16, characterised in that the layer comprises inorganic material which is evaporated and/or sputtered on.

18. Interferometer according to claim 15 or 17, characterised in that the material is a layer of silicon oxide.

19. Interferometer according to claim 1, characterised in that light emerging from the waveguide of the measurement arm (7₁) is collimated by means of a lens (14), and is directed on to a reflector (15) on the object to be measured.

20. Interferomoter according to claim 19, characterised in that the lens (14) is a graded-index lens.

21. Interferometer according to claim 1, characterised in that light emerging from the waveguide of the measurement arm (7₁) is collimated by means of a focusing grid, uncoupled and directed on to a reflector (15) on the object to be measured.

22. Interferometer according to claim 1, characterised in that a common reflector (58) is attached to the end face of the substrate for the measurement arm and the reference arms.

23. Interferometer of the Mach-Zehnder interferometer type according to claim 1, characterised in that the waveguides of the reference arms and of the measurement arm terminate in the form of multiple couplers, signals with a phase displacement relative to one another being detectable at the outputs of said multiple couplers.

24. Interferometer according to claim 23, characterised in that the couplers are in the form of double directional couplers (61, 62), and in that signals with phase displacement relative to one another of approximately 180° are detectable at the outputs of said double directional couplers (61, 62).

25. Interferometer according to claim 1, characterised in that, in the measurement arm, the light is collimated, uncoupled and directed on to a reflector (15) on the object to be measured by means of a first focusing grid (57), the light being reflected at this point and, by means of a second focusing grid (67, being in turn coupled into the waveguide of the measurement arm (7₁).

26. Interferometer according to claim 25, characterised in that the reflector on the object to be measured is a retroreflecting element (Fig. 12).

27. Interferometer according to one or more of claims 1 to 26, characterised by pre-amplifiers (22, 23) incorporated after the photodetectors, pulse formers (24, 25) incorporated after the pre-amplifiers, a trigger unit (30) for the thermo-optic or thermo electric modulator (19), a direction discriminator (27), a counter (28) incorporated after the latter, and by a first display device (31).

28. Interferometer according to claim 27, characterised in that, in order to trigger the thermo-optic or thermo-electric modulator (19),there is provided a function generator (29), which is connected to a phase-measuring apparatus (34) into which is placed the signal coming from a photodetector (21) and filtered in a band-pass filter (33), said phase-measuring apparatus (34) being connected to a second display device (35).

29. Interferometer according to claim 28, characterised in that the function generator (29) is connected to a store (32) located between the counter (28) and the first display device (31).

30. Interferometer according to one of claims 27 to 29, characterised in that, for single sideband modulation, the thermo-optic or thermo-electric modulator (19) is triggered by saw-tooth-shaped signals generated by the function generator (29), and in that the phase between the saw-tooth-shaped signals and the signal filtered in a band-pass filter (33) of a photodetector (21) is measured and displayed.

31. Interferometer according to claim 27 or 28, characterised in that the modulator (29) is triggered by a step-shaped digital modulation function with a 2π phase rotation within one period.

32. Interferometer according to claim 27 or 28, characterised in that the modulator (29) is triggered by a digital function which extends in a meandering fashion about a saw-tooth curve.

33. Interferometer according to one of claims 27 to 29, characterised in that the repeat frequency of the function triggering the modulator (19) is 1 kHz.

34. Interferometer according to one of the preceding claims, characterised in that, in order to set the triggering stages for a thermo-optic or electro-optic modulator, either a potentiometer is provided for each stage and the corresponding phase stroke, or a microprocessor with digital/analog converter and software-controlled stage function is provided.

## Revendications

1. Interféromètre comportant une source de lumière, de préférence une source de lumière laser monochromatique, au moins un diviseur de faisceau (9), un combinateur de faisceaux (10, 11), le diviseur de faisceau (9) et le combinateur de faisceaux (10, 11) étant formés sur un substrat (1) par des éléments optiques intégrés, des branches de mesure (7₁) et de référence (6₁, 8₁), au moins deux branches de référence (6₁, 7₁) séparées étant prévues à côté de la branche de mesure (7₁), lesquelles branches de référence pour produire une différence de phase ont une longueur de trajet optique différente, un modulateur de phase commandé qui est disposé sur la branche de mesure (7₁) et est destiné à commander le phasage, des guides de lumière pour amener la lumière au diviseur de faisceau et pour ramener la lumière à des détecteurs photo-électriques et une électronique d'exploitation qui est connectée aux détecteurs photo-électriques (20, 21) et est destinée à déterminer avec le signe correct la variation de la longueur du trajet optique dans la branche de mesure (7₁).

2. Interféromètre selon la revendication 1, caractérisé par le fait que le modulateur de phase au nombre d'au moins un est un modulateur thermo-optique ou électro-optique.

3. Interféromètre selon la revendication 1, caractérisé par le fait qu'un modulateur de phase thermo-optique ou électro-optique est associé à la branche de mesure (7₁) et par le fait qu'un modulateur de phase supplémentaire est associé à l'une au moins des branches de référence (6₁) ou (8₁).

4. Interféromètre selon la revendication 1 ou 2, caractérisé par le fait qu'un modulateur de phase thermo-optique ou électro-optique qui fonctionne avec une tension continue ou un courant continu est associé à une branche de référence (6₁, 8₁).

5. Interféromètre selon la revendication 4, caractérisé par le fait que l'alimentation en tension ou en courant est réglable afin d'obtenir un déphasage constant entre les branches de référence (6₁, 8₁).

6. Interféromètre selon l'une des revendications 1 à 5, caractérisé par le fait que l'éclairage et/ou le retour de lumière aux capteurs photo-électriques à lieu au moyen de fibres optiques (3, 4, 5).

7. Interféromètre du type interféromètre de Michelson selon la revendication 1, caractérisé par le fait que la branche de mesure (7₁) et les branches (6₁, 8₁) sont limitées chacune par un réflecteur (15, 16, 17; 52, 53, 55; 58).

8. Interféromètre selon la revendication 7, caractérisé par le fait que les réflecteurs dans les branches de mesure et les branches de référence sont constitués par des miroirs (15, 16, 17,58).

9. Interféromètre selon la revendication 7, caractérisé par le fait que les réflecteurs dans les branches de mesure et les branches de référence sont constitués par des réflecteurs réseau de BRAGG (52, 53, 55).

10. Interféromètre selon l'une des revendications 1 à 9, caractérisé par le fait que les guides de lumière sont formés par échange structuré d'ions dans un substrat en verre.

11. Interféromètre selon les revendications 1 et 10, caractérisé par le fait qu'après réglage de l'écart de phase on enlève de la couche substrat en verre une couche d'épaisseur définie au dessus d'un guide de lumière appartenant à une branche de référence.

12. Interféromètre selon l'une des revendications 1 à 9, caractérisé par le fait que les guides de lumière sont formés par diffusion de titane ou échange de protons sur un substrat cristallin de niobate de lithium.

13. Interféromètre selon l'une des revendications 1 à 9, caractérisé par le fait que les guides de lumière sont formés par dopage sur un substrat semi-conducteur III-V.

14. Interféromètre selon l'une des revendications 1 à 9, caractérisé par le fait que les guides de lumière sont formés de verre ou d'un matériau organique sur un substrat semi-conducteur par exemple avec interposition d'une couche intermédiaire d'oxyde.

15. Interféromètre selon la revendication 1, caractérisé par le fait qu'un matériau qui modifie l'indice de réfraction est appliqué sous la forme d'une couche sur le substrat dans la région d'un guide de lumière appartenant à une branche de référence.

16. Interféromètre selon la revendication 12, caractérisé par le fait que le matériau modifiant l'indice de réfraction est un matériau organique.

17. Interféromètre selon la revendication 16, caractérisé par le fait que la couche est formée d'un matériau minéral déposé en phase vapeur et/ou projeté.

18. Interféromètre selon la revendication 15 ou 17, caractérisé par le fait que le matériau est une couche d'oxyde de silicium.

19. Interféromètre selon la revendication 1, caractérisé par le fait que la lumière qui sort du guide de lumière de la branche de mesure (7₁) subit une collimation au moyen d'une lentille (14) et est dirigée sur un réflecteur (15) placé sur l'objet à mesurer.

20. Interféromètre selon la revendication 19, caractérisé par le fait que la lentille (14) est une lentille à gradient d'indice.

21. Interféromètre selon la revendication 1, caractérisé par le fait que la lumière qui sort du guide de lumière de la branche de mesure (7₁) est prélevée avec collimation au moyen d'un réseau focalisant et est dirigée sur un réflecteur (15) placé sur l'objet à mesurer.

22. Interféromètre selon la revendication 1, caractérisé par le fait qu'un réflecteur (58) commun pour la branche de mesure et la branche de référence est placé sur la face frontale du substrat.

23. Interféromètre de type interféromètre de MAC-ZEHNDER selon la revendication 1, caractérisé par le fait que les guides de lumière des branches de référence et de la branche de mesure se terminent sous la forme de coupleurs multiples, des signaux mutuellement déphasés étant disponibles au niveau de leurs sorties.

24. Interféromètre selon la revendication 23, caractérisé par le fait que les coupleurs sont agencés sous forme de coupleurs directionnels doubles (61, 62) et par le fait que des signaux mutuellement déphasés d'environ 180° sont disponibles au niveau de leurs sorties.

25. Interféromètre selon la revendication 1, caractérisé par le fait que dans la branche de mesure, la lumière est découplée avec collimation au moyen d'un premier réseau (57) focalisant et dirigée sur un réflecteur (15) disposé sur l'objet à mesurer, est réfléchie par celui-ci et, au moyen d'un deuxième réseau (67) focalisant est de nouveau couplée dans le guide de lumière de la branche de mesure (7₁).

26. Interféromètre selon la revendication 25, caractérisé par le fait que le réflecteur placé sur l'objet à mesurer est un élément rétroréfléchissant (figure 12).

27. Interféromètre selon l'une ou plusieurs des revendications 1 à 26, caractérisé par des préamplificateurs (22, 23) branchés à la suite des détecteurs photo-électriques, des générateurs d'impulsion (24, 25) branchés à la suite des préamplificateurs, une unité de commande (30) pour le modulateur (19) thermo-optique ou thermo-électrique, un discriminateur de direction (27), un compteur (28) monté à la suite de ce dernier et un premier dispositif d'affichage (31).

28. Interféromètre selon la revendication 27, caractérisé par le fait qu'il est prévu pour commander le modulateur (19) thermo-optique ou électro-optique un générateur de fonction (29) qui est connecté à un appareil de mesure de phase (34) auquel est envoyé le signal provenant d'un détecteur photo-électrique (21) filtré dans un filtre passe-bande (33) et qui est connecté à un deuxième dispositif d'affichage (35).

29. Interféromètre selon la revendication 28, caractérisé par le fait que le générateur de fonction (29) est connecté à une mémoire qui est placée entre le compteur (28) et le premier dispositif d'affichage (31).

30. Interféromètre selon l'une des revendications 27 à 29, caractérisé par le fait que pour réaliser la modulation à bande latérale unique, le modulateur (19) thermo-optique ou électro-optique est commandé par des signaux en dent de scie produits par le générateur de fonction (29) et par le fait que la phase entre les signaux en dent de scie et le signal d'un détecteur photo-électrique (21) filtré dans un filtre passe-bande (33) est mesuré et affiché.

31. Interféromètre selon la revendication 27 ou 28, caractérisé par le fait que le modulateur (19) est commandé par une fonction de modulation numérique en escalier avec une rotation de phase de 2π au cours d'une période.

32. Interféromètre selon la revendication 27 ou 28, caractérisé par le fait que le modulateur (19) est commandé par une fonction numérique qui évolue en méandres autour d'une courbe en dent de scie.

33. Interféromètre selon l'une des revendications 27 à 29, caractérisé par le fait que la fréquence de répétition de commande du modulateur (19) est de 1 kHz.

34. Interféromètre selon l'une des revendications précédentes, caractérisé par le fait qu'il est prévu pour le réglage des étages de commande d'un modulateur thermo-optique ou électro-optique soit un potentiomètre pour chaque étage et l'amplitude de déphasage correspondante, soit un micro-processeur avec convertisseur numérique/analogique et fonction d'étage pilotée par logiciel.
